Europäisches Patentamt

European Patent Office

Office européen des brevets

(19)

(11) Numéro de publication: **0 315 512**
**A1**

(12) **DEMANDE DE BREVET EUROPEEN**

(21) Numéro de dépôt: **88402725.1**

(22) Date de dépôt: **28.10.88**

(51) Int. Cl.⁴: **H 04 B 9/00**
G 02 B 6/12, G 02 B 6/34,
H 04 Q 3/52

(30) Priorité: **03.11.87 FR 8715200**

(43) Date de publication de la demande:
**10.05.89 Bulletin 89/19**

(84) Etats contractants désignés: **DE GB IT NL SE**

(71) Demandeur: **THOMSON-CSF**
**173, Boulevard Haussmann**
**F-75379 Paris Cédex 08 (FR)**

(72) Inventeur: **Pocholle, Jean-Paul**
**THOMSON-CSF SCPI 19, avenue de Messine**
**F-75008 Paris (FR)**

Bourbin, Yannic
**THOMSON-CSF SCPI 19, avenue de Messine**
**F-75008 Paris (FR)**

Papuchon, Michel
**THOMSON-CSF SCPI 19, avenue de Messine**
**F-75008 Paris (FR)**

Huignard, Jean-Pierre
**THOMSON-CSF SCPI 19, avenue de Messine**
**F-75008 Paris (FR)**

Puech, Claude
**THOMSON-CSF SCPI 19, avenue de Messine**
**F-75008 Paris (FR)**

(74) Mandataire: **Sciaux, Edmond et al**
**THOMSON-CSF SCPI**
**F-92045 PARIS LA DEFENSE CEDEX 67 (FR)**

(54) Dispositif d'interconnexion optique dynamique pour circuits intégrés.

(57) L'invention concerne un dispositif permettant d'interconnecter plusieurs puces de circuits intégrés par des liaisons optiques variables en fonction du temps. Un exemple de réalisation comporte :
- deux diodes laser couplées (1,2), émettant une onde lumineuse modulée en fréquence et en amplitude par des signaux électriques ($I_m$ et $I_e$) commandant la sélection d'une interconnexion parmi plusieurs, et traduisant une suite de données binaires ;
- un guide optique (3) enterré à la surface d'un substrat semiconducteur (9) ;
- un réseau diffractant (4) gravé à la surface du guide (3) et du substrat (9), couplé au guide (3) pour diffracter la lumière dans une pluralité de directions ($\theta_i$) en fonction de la longueur d'onde ($\lambda_i$) ;
- des photodiodes (5 à 8) situées respectivement dans chacune des directions où la lumière peut être diffractée, pour fournir un signal électrique traduisant les données binaires transmises dans la direction correspondant à la photodiode.

Dans d'autres exemples de réalisation, les photodiodes sont couplées aux diodes laser (1, 2) par l'intermédiaire d'un réseau holographique.

L'invention est applicable notamment aux circuits intégrés à très grande échelle, pour interconnecter plusieurs puces.

FIG. 1

EP 0 315 512 A1

**Description**

**Dispositif d'interconnexion optique dynamique pour circuits intégrés.**

L'invention concerne un dispositif d'interconnexion optique dynamique pour circuits intégrés, permettant de réaliser des interconnexions variables dans le temps, entre plusieurs puces supportant des circuits intégrés, pour leur permettre d'échanger des données.

Il est connu de réaliser des interconnexions statiques entre des circuits intégrés, aux moyens de composants optiques discrets ou intégrés, telles que des lentilles, des réseaux holographique, des guides optiques, des fibres optiques, etc...

Le but de l'invention est de permettre une modification des interconnexions au cours du temps pour permettre, par exemple :
- un accès séquentiel ou parallèle à plusieurs circuits électroniques ;
- une possibilité de redondance du traitement de signaux, par une commutation au sein d'un circuit ou d'un ensemble de circuits pour remédier à la défaillance d'un composant ;
- une réalisation de traitements en parallèle ;
- une reconfiguration temporelle et spatiale de l'architecture d'un système, en modifiant les interconnexions entre les circuits constituant ce système.

L'objet de l'invention est un dispositif permettant de relier un circuit intégré à un autre circuit intégré sélectionné parmi plusieurs, au moyen d'un faisceau de lumière diffractée dans une direction choisie parmi plusieurs directions prédéterminées, en fonction d'un signal électrique de commande. Ce dispositif a notamment pour avantage d'être intégrable à un circuit intégré sur une puce de silicium.

Selon l'invention un dispositif d'interconnexion optique dynamique pour circuits intégrés, est caractérisé en ce qu'il comporte
- au moins un dispositif émetteur de lumière cohérente modulée en fréquence et en amplitude, en fonction de signaux électriques sélectionnant une interconnexion parmi plusieurs et représentant une suite de données ;
- au moins un guide optique couplé au dispositif émetteur ;
- au moins un réseau diffractant couplé au guide, pour diffracter la lumière émise par le dispositif émetteur dans une direction fonction de la fréquence de cette lumière ;
- une pluralité de récepteurs photoélectriques couplés au réseau diffractant de manière à recevoir la lumière diffractée respectivement dans une pluralité de directions prédéterminées correspondant à une pluralité d'interconnexions, chaque récepteur fournissant un signal électrique fonction de l'amplitude de la lumière diffractée dans la direction correspondante, lorsque cette interconnexion est sélectionnée.

L'invention sera mieux comprise et d'autres détails apparaîtront à l'aide de la description ci-dessous et des figures l'accompagnant :
- La figure 1 représente schématiquement un exemple de réalisation d'un dispositif selon l'invention ;
- La figure 2 illustre une application du dispositif selon l'invention ;
- La figure 3 représente une coupe de l'exemple de réalisation représenté sur la figure 1 ;
- les figures 4a et 4b représentent des graphes illustrant les performances d'un exemple de réalisation du dispositif selon l'invention ;
- les figures 5 à 10 représentent des chronogrammes des signaux de commande de cet exemple de réalisation ;
- Les figures 11 à 14 représentent quatre variantes de réalisation du dispositif selon l'invention.

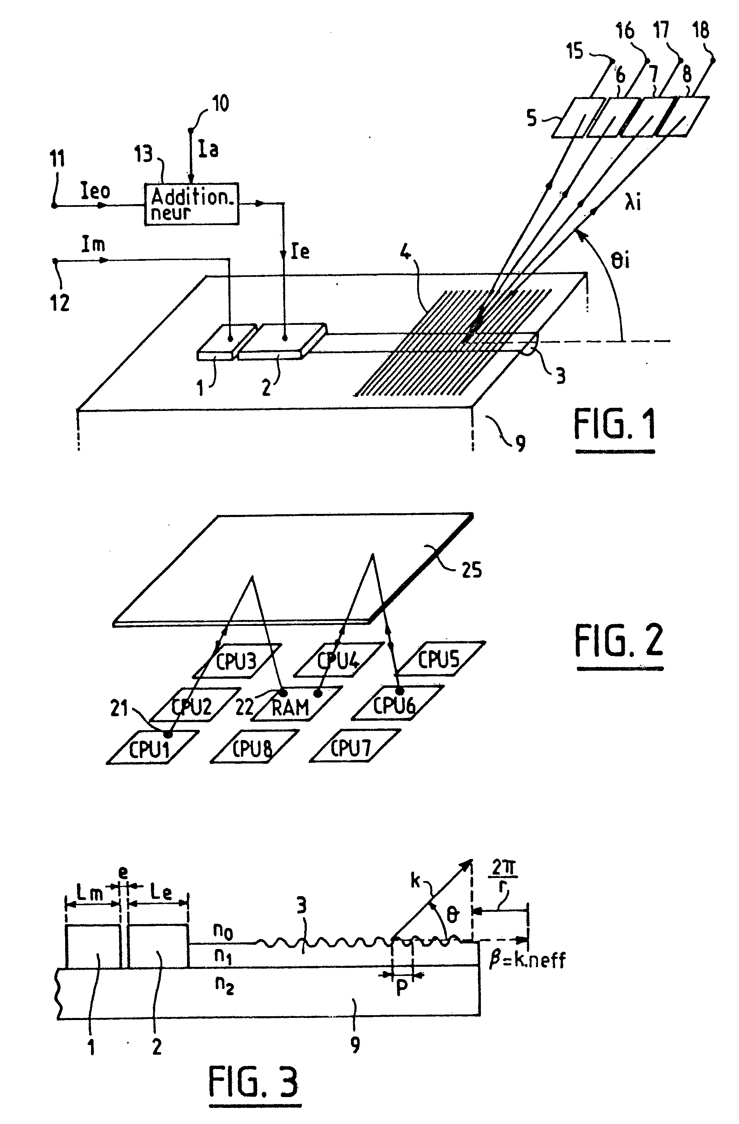

La figure 1 représente schématiquement un premier exemple de réalisation du dispositif selon l'invention, comportant : deux diodes laser, 1 et 2, couplées pour constituer un dispositif émetteur de lumière cohérente modulable en intensité et en fréquence ; un guide optique, 3, couplé à une sortie de la diode laser 2 et enterré à la surface d'un substrat semiconducteur 9 supportant aussi les diodes laser 1 et 2 ; un réseau diffractant 4 couplé au guide 3, les lignes de ce réseau 4 étant ou pouvant être gravées perpendiculairement au grand axe du guide 3, sur la surface commune au guide 3 et au substrat 9 ; une borne d'entrée 12 reliée à la diode laser 1 pour lui fournir un courant d'intensité $I_m$ ; deux bornes d'entrée 10 et 11 reliées respectivement à deux entrées d'un additionneur analogique 13 dont une sortie est reliée à la diode laser 2 pour lui fournir un courant d'intensité $I_e$, ce courant étant la somme de deux courants appliqués respectivement aux deux bornes d'entrée 10 et 11 et ayant des intensités $I_d$ et $I_{eo}$ respectivement ; quatre photodiodes, 5 à 8 situées dans un plan parallèle à la surface du substrat 9, audessus de ce substrat, et reliées respectivement à quatre bornes de sortie : 15 à 18.

Les diodes laser couplées, 1 et 2, émettent une lumière cohérente dont l'intensité et la fréquence sont fonctions des deux intensités $I_m$ et $I_e$.

Dans cet exemple de réalisation, les intensités $I_{eo}$ et $I_m$ permettent de commander la fréquence de la lumière ; l'intensité $I_d$ permet de commander l'intensité de cette lumière pour transmettre des données binaires. Le réseau 4 dévie cette lumière à l'intérieur d'un plan perpendiculaire aux lignes du réseau 4 et passant par le grand axe du guide 3, selon un angle $\theta_i$ fonction de la longueur d'onde $\lambda_i$ de cette lumière. Dans cet exemple la fréquence de la lumière peut prendre quatre valeurs, correspondant à quatre longueurs d'onde $\lambda_i$, pour $i = 1$ à 4, et par conséquent la lumière est déviée selon quatre directions $\theta_i$, par rapport au grand axe du guide 3.

Les photodiodes 5 à 8 sont disposées de façon à recevoir la lumière émise respectivement dans les quatre directions $\theta_i$ pour $i = 1$ à 4. La photodiode qui reçoit la lumière la convertit en un signal électrique représentatif des données binaires, et le fournit à la borne de sortie correspondant à cette photodiode. Dans cet exemple, les photodiodes 5 à 8 sont intégrées dans une puce dont le plan est parallèle mais non coplanaire au substrat 9.

Dans d'autres exemples de réalisation, tel que celui représenté sur la figure 2, les deux parties du dispositif d'interconnexion ne sont pas situées en vis-à-vis mais dans le même plan que le substrat 9. Elles sont couplées par l'intermédiaire d'un réseau holographique 25. Dans l'exemple représenté sur la figure 2, huit unités centrales notées CPU1 à CPU8, et une mémoire notée RAM, sont situées dans un même plan et sont interconnectées aux moyens de dispositifs selon l'invention, par l'intermédiaire d'un réseau holographique 25 situé dans un plan parallèle au plan contenant ces circuits intégrés.

Par exemple, l'unité centrale CPU1 peut communiquer avec la mémoire RAM au moyen d'un émetteur-récepteur de données, 21, constitué par des éléments analogues à ceux représentés sur la figure 1, et situés sur la puce de CPU1. De même, l'émetteur-récepteur de données 22 situé sur la mémoire RAM comporte des éléments analogues à ceux représentés sur la figure 1, et situés sur la puce de RAM 1.

Les diodes laser, 1 et 2, et le guide 3 sont réalisés dans un alliage semiconducteur GaAs ou GaAlAs. Ce type d'alliage peut être intégré, par une technique connue, à un substrat de silicium utilisé classiquement pour réaliser les circuits intégrés. Les photodiodes peuvent être réalisées directement dans un substrat de silicium. Les longueurs d'onde utilisées sont situées dans le domaine spectral 0,8 à 0,9 microns.

La figure 3 représente schématiquement une coupe du dispositif émetteur de lumière cohérente constitué par les diodes laser 1 et 2 couplées au guide 3. Leur réalisation est classique. Elles ont pour longueurs respectivement $L_n$ et $L_e$ et sont séparées par un intervalle de largeur e. Le matériau constituant le guide 3 a un indice $n_1$ et le matériau constituant le substrat 9 a un indice $n_2$. Mais l'indice effectif dans le guide 3 a une valeur $n_{eff}$ qui est comprise entre $n_1$ et $n_2$. La constante de propagation longitudinale associée au mode guidé dans le guide 3 est noté $\beta$ et est égale à $k.n_{eff}$ où $k = 2\pi/\lambda$. Le pas du réseau est noté P. Le réseau diffracte la majeure partie de l'énergie de l'onde dans une seule direction, $\theta$, mesurée par rapport au plan du réseau.

Comme représenté sur la figure 3, la conservation de la composante longitudinale du champ impose que la relation suivante soit satisfaite :

$$\beta - \frac{2\pi}{P} = k.\cos\theta \quad (1)$$

Cette équation peut encore se mettre sous la forme :

$$n_{eff} - \frac{\lambda}{P} = \cos\theta \quad (2)$$

Si la longueur d'onde varie de $\Delta\lambda$, l'angle $\theta$ varie de $\Delta\theta$, selon la formule :

$$\frac{\Delta\theta}{\Delta\lambda} = \frac{1}{\sin\theta} \cdot \left( \frac{1}{P} - \frac{dn_{eff}}{d\lambda} \right) \quad (3)$$

La variation d'angle est donc d'autant plus grande que $\sin\theta$ est faible et que le rapport

$$\frac{dn_{eff}}{d\lambda}$$

est important, c'est-à-dire pour une longueur d'onde correspondant au voisinage de la bande interdite du matériau constituant le guide. D'autre part, par un choix judicieux de l'épaisseur du guide et de la différence d'indice $n_1 - n_2$, il est possible d'accroître la variation de l'angle pour une variation donnée de la longueur d'onde. Il est possible aussi d'optimiser la variation,

$$\frac{dn_{eff}}{d\lambda},$$

de l'indice effectif en fonction de la variation de la longueur d'onde.

Le guide 3 est constitué par un matériau semiconducteur pour permettre son intégration à une puce de circuit intégré. Dans ce cas, la divergence angulaire du faisceau défléchie est donnée par la formule :

$$\delta\theta = \frac{\lambda}{L_{eff} \cdot \sin\theta} \qquad (4)$$

par laquelle $L_{eff}$ est la longueur effective de l'interaction entre la lumière et le réseau, en prenant en compte les pertes. Le nombre maximal N de directions $\theta_i$ pouvant être résolues spatialement est alors donné par la formule suivante :

$$N = \frac{\Delta\theta}{\delta\theta} = (- \frac{dn_{eff}}{d\lambda} + \frac{1}{P}) - \frac{\Delta\lambda}{\lambda} \cdot L_{eff} \qquad (5)$$

dans laquelle $\Delta\lambda$ est l'excursion de longueur d'onde réalisable avec le dispositif émetteur de lumière cohérente qui est utilisé.

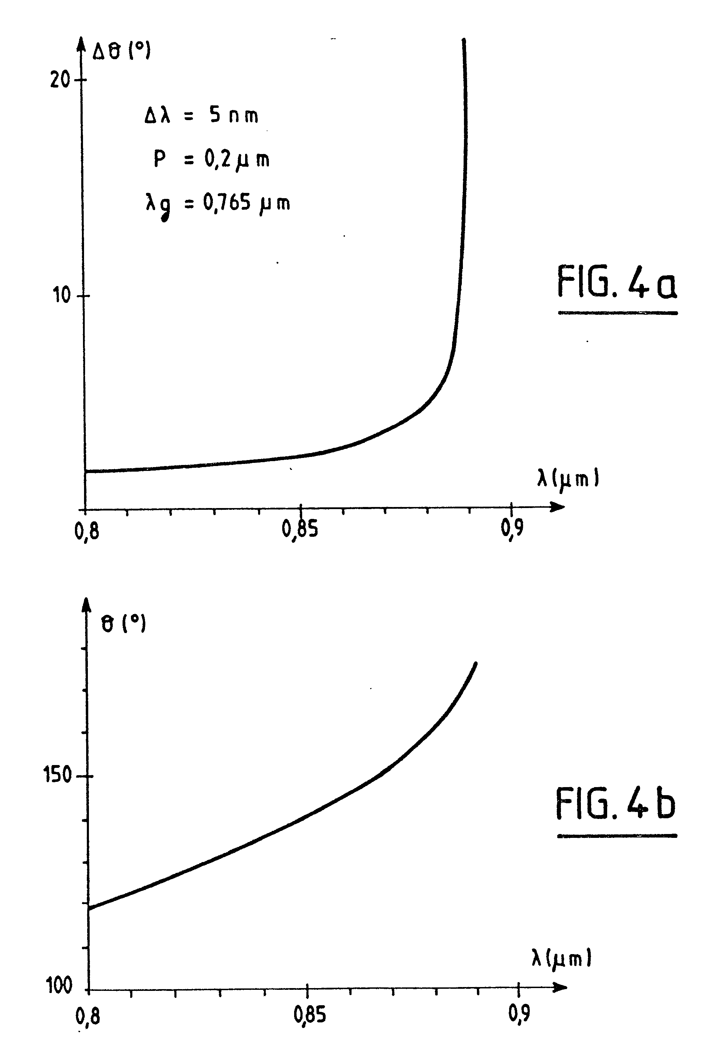

Les figures 4a et 4b représentent des graphes illustrant le fonctionnement du dispositif selon l'invention, dans un exemple de réalisation où le guide 3 est constitué de $Ga_{0,85} Al_{0,15} As$ et où le substrat 9 est constitué de $Ga_{0,72} Al_{0,18} As$ ; où P = 0,2 micron ; et où la longueur d'onde limite de transparence, $\lambda_g$ est égale à 0,765 micron, dans le matériau du guide.

Sur la figure 4a est représentée la variation $\Delta\theta$ de l'angle de déviation pour une variation $\Delta\lambda = 5nm$ de la longueur d'onde, autour d'une longueur d'onde fixée dans la gamme de 0,8 à 0,89 micron. Il apparaît que la déviation peut dépasser 20 degrés au voisinage de la longueur d'onde 0,89 micron.

Sur la figure 4b est représenté l'angle de déviation $\theta$ en fonction de la longueur d'onde, dans la gamme 0,8 à 0,89 micron. Il apparaît que la déviation varie d'environ 69 degrés dans cette gamme.

La diode laser 2 est dite esclave et est pilotée par un courant d'intensité $I_e$ qui est la somme d'une composante continue et d'une composante variable telles que cette somme est supérieure à une valeur de seuil $I_{sl}$ nécessaire pour le déclenchement d'une émission de lumière. La diode laser 1 est dite maître et est pilotée par une courant d'intensité $I_m$ qui est la somme d'une composante continue et d'une composante variable, telles que cette somme reste inférieure à la valeur de seuil $I_{sl}$ dans tous les cas.

Lorsque les deux composantes variables des intensités $I_e$ et $I_m$ sont nulles, il n'y a aucune émission lumineuse. Lorsque la valeur de l'intensité $I_e$ est supérieure à la valeur de seuil $I_{sl}$, il y a une émission lumineuse dont la longueur d'onde peut être commandée par la valeur de la compoosante variable de l'intensité $I_m$. Quand cette composante variable augmente en valeur absolue la longueur d'onde d'émission diminue et l'intensité lumineuse augmente. L'excursion de fréquence est déterminée par les longueurs, $L_e$ et $L_m$, des cavités des diodes laser et par les valeurs des intensités $I_e$ et $I_m$. L'espacement en fréquence des modes longitudinaux des cavités des deux diodes laser est donné respectivement par les formules suivantes :

$$\Delta\lambda_e = \frac{\lambda_o^2}{2N_e \cdot L_e} \qquad (6)$$

$$\Delta\lambda_m = \frac{\lambda_o^2}{2N_m \cdot L_m} \qquad (7)$$

où $N_e$ et $N_m$ représentent respectivement les indices optiques effectifs de chacune des cavités et où $\lambda_o$ est la longueur d'onde moyenne de l'émission lumineuse. Les modes couplés entre ces deux cavités correspondent à ceux pour lesquels la réalisation d'une interférence constructive est obtenue. Ceci correspond à un nouveau spectre modal dans lequel l'espacement entre les modes adjacents est donné la formule suivante :

$$\Delta\lambda_{e.m} = \frac{\lambda_o^2}{2(N_e \cdot L_e - N_m \cdot L_m)} \qquad (8)$$

L'espacement obtenu est bien supérieur à celui existant entre les modes longitudinaux de chacune des cavités. D'autre part, ce type de source a aussi pour propriété la conservation du caractère monomode longitudinal.

Les deux diodes laser couplées peuvent en outre jouer le rôle d'un circuit logique combinatoire pour les

intensités $I_e$ et $I_m$. Il est connu par : W.T. TSANG, N.A. OLSSON, R.A. LOGAN dans Optoelectronic logic operation by cleaved coupled cavity semiconductors lasers, IEEE Journ. of Quant.Elect. QE-19, Nov.1983 p. 1621, de réaliser des fonctions logiques OU, ET, ou OU EXCLUSIF au moyen de deux diodes laser couplées.

D'autre part, il est connu par : N.A. OLSSON. W.T.TSANG, R.A. LOGAN, I.P.KAMINOW, J.S.KO, dans Spectral bistability in coupled cavity semiconductor lasers, Appl. Phys.Lett. 44(4), 15 Feb.1984 p.375, de réaliser un dispositif logique bistable au moyen de deux diodes laser couplées, ce qui permet d'utiliser deux signaux de commande constitués d'impulsions fugitives.

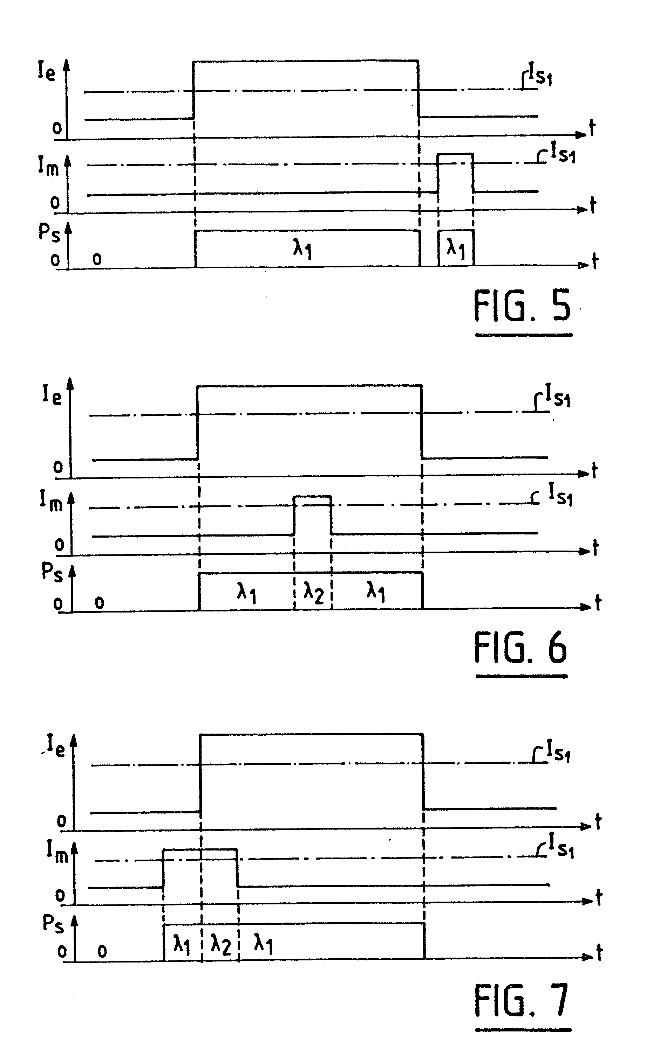

Les figures 5 à 8 représentent des chronogrammes illustrant la réalisation d'un exemple de fonction logique. Sur ces chronogrammes les intensités $I_e$ et $I_m$ ne peuvent prendre chacune que deux valeurs, l'une dite haute, l'autre dite basse. Dans cet exemple de réalisation, les deux diodes couplées émettent sur une longueur d'onde $\lambda_1$ si $I_e$ ou $I_m$ prend seul sa valeur haute ; elles émettent sur une longueur d'onde $\lambda_2$ si $I_e$ et $I_m$ prennent simultanément leur valeur haute ; et elles n'émettent aucune lumière si $I_e$ et $I_m$ prennent simultanément leurs valeurs basses.

La figure 5 montre que la puissance lumineuse émise $P_s$ est nulle lorsque les intensités $I_e$ et $I_m$ sont égales respectivement à leurs valeurs basses qui sont des composantes continues très inférieures à la valeur de seuil $I_{sl}$. Lorsque l'intensité $I_e$ prend sa valeur haute, qui est supérieure à la valeur de seuil, alors que l'intensité $I_m$ reste égale à sa valeur basse, un faisceau lumineux est émis avec une longueur d'onde $\lambda_1$. De même, lorsque $I_e$ est égale à sa valeur basse alors que $I_m$ prend sa valeur haute, qui est inférieure à la valeur de seuil mais très supérieure à sa valeur basse, une onde lumineuse de longueur d'onde $\lambda_1$ est émise.

La figure 6 illustre un cas où l'intensité $I_e$ prend sa valeur haute pendant un intervalle de temps pendant lequel l'intensité $I_m$ prend aussi sa valeur haute, mais pendant une durée inférieure. Pendant l'intervalle de temps où les deux intensités $I_e$ et $I_m$ prennent simultanément leur valeur haute la longueur d'onde prend une valeur $\lambda_2$, alors que pendant les intervalles de temps où l'intensité $I_e$ est la seule à prendre sa valeur haute, la longueur d'onde reste égale à $\lambda_1$.

La figure 7 illustre un cas où l'intensité $I_e$ prend sa valeur haute à un instant qui est situé pendant un intervalle où l'intensité $I_m$ a sa valeur haute. Lorsque l'intensité $I_m$ prend sa valeur haute, alors que l'intensité $I_e$ est égale à sa valeur basse, une onde lumineuse est émise avec une longueur d'onde $\lambda_1$. Puis, pendant l'intervalle où les deux intensités $I_e$ et $I_m$ prennent respectivement leurs valeurs hautes, la longueur d'onde passe à la valeur $\lambda_2$. Puis lorsque l'intensité $I_e$ est la seule à garder sa valeur haute, la longueur d'onde repasse à la valeur $\lambda_1$. Enfin, lorsque les deux intensités $\lambda_e$ et $\lambda_m$ ont leur valeur basse, l'émission lumineuse cesse.

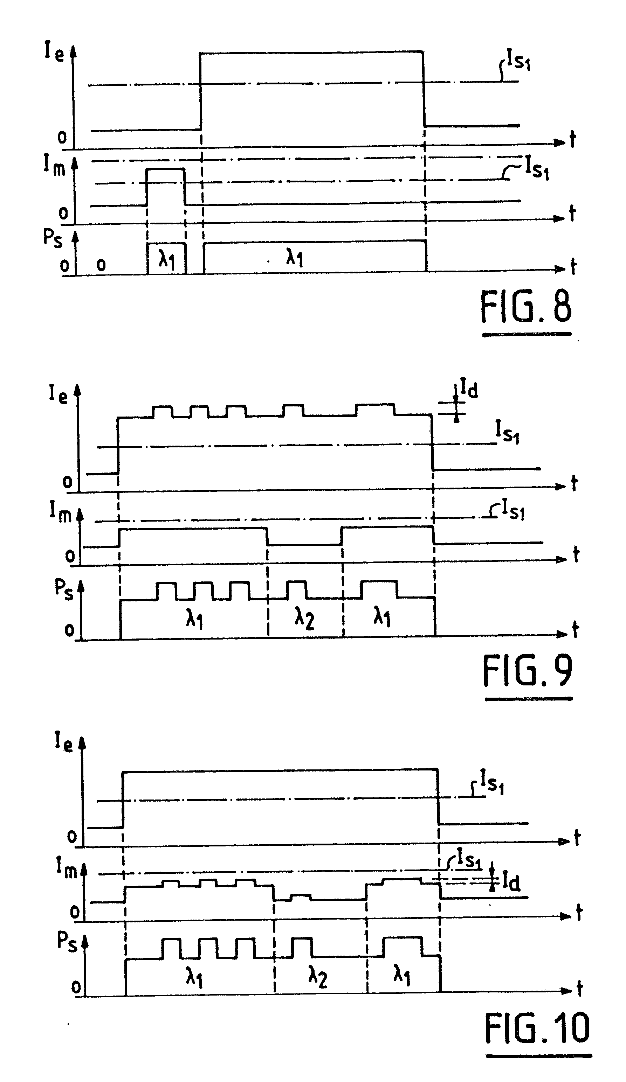

La figure 8 représente un cas où l'intensité $I_m$ prend sa valeur haute pendant un intervalle de temps où l'intensité $I_e$ reste égale à sa valeur basse, la longueur d'onde de la lumière émise étant alors égale à $\lambda_1$ ; et où, ensuite, l'intensité $I_e$ prend sa valeur haute pendant un intervalle de temps où l'intensité $I_m$ reste à sa valeur basse, la longueur d'onde de la lumière émise étant de nouveau égale à $\lambda_1$. Pendant la durée séparant ces deux intervalles les intensités $I_e$ et $I_m$ restant à leurs valeurs basses, aucune lumière n'est émise.

La transmission de données par la lumière émise peut être réalisée en modulant soit l'intensité $I_m$ , soit l'intensité $I_e$, en lui additionnant un signal électrique d'intensité $I_d$ dont l'amplitude est faible par rapport à la valeur haute de l'intensité à moduler. Les figures 9 et 10 illustrent ces deux variantes possibles.

Sur la figure 9, l'intensité $I_m$ prend successivement sa valeur haute, puis sa valeur basse, puis sa valeur haute, pendant que l'intensité $I_e$ prend sa valeur haute modulée par le signal de données d'intensité $I_d$, pour émettre successivement ces données en modulant l'amplitude d'une lumière de longueur d'onde $\lambda_1$, puis $\lambda_2$, puis $\lambda_1$ respectivement.

Sur la figure 10, l'intensité $I_m$ prend successivement sa valeur haute, puis sa valeur basse, puis sa valeur haute, en étant modulée par l'intensité $I_d$ du signal de données, pendant que l'intensité $I_e$ prend continûment sa valeur haute. L'intensité Id a une valeur telle que la somme $I_m + I_d$ reste inférieure à la valeur de seuil $I_{sl}$. Comme dans le premier cas, la longueur d'onde de la lumière émise prend successivement les valeurs $\lambda_1$, $\lambda_2$, $\lambda_1$.

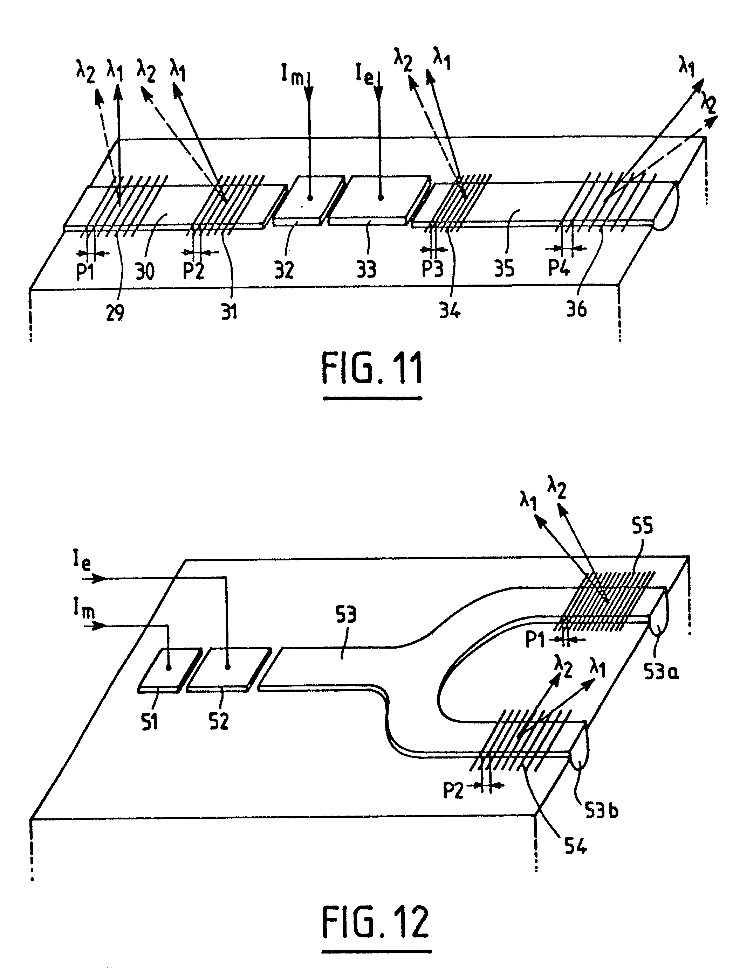

Les figures 11 à 14 représentent diverses variantes de réalisation du dispositif selon l'invention, permettant de multiplier le nombre d'interconnexions réalisées à partir d'un point donné. La figure 11 représente une variante comportant : deux diodes laser couplées, 32 et 33 ; deux guides optiques 30 et 35, respectivement couplés à une sortie de la diode laser 32 et à une sortie de la diode laser 33, les deux guides étant alignés. Le guide 30 est couplé à deux réseaux diffractants, 29 et 31, ayant deux pas différents P1 et P2. Le guide 35 est couplé à deux réseaux diffractants 34 et 36 ayant deux pas différents respectivement P3 et P4, différents de P1 et P2. Pour une même longueur d'onde, les quatre ré seaux diffractent la lumière dans quatre directions distinctes.

La commutation d'une longueur d'onde $\lambda_1$ à une longueur d'onde $\lambda_2$ permet donc de réaliser une fonction de commutation à deux positions sur quatre circuits transmettant un même signal binaire. Le nombre de positions n'est pas limité à deux, il est tout à fait possible de commander la valeur des intensités $I_m$ et $I_e$ pour réaliser une commutation dans trois ou quatre directions, par exemple, pour chaque réseau.

La figure 12 représente une autre variante de réalisation comportant deux diodes laser couplées, 51 et 52 ; et un guide 53 couplé à une sortie de la diode laser 52, et qui se subdivise en deux guides 53a et 53b ayant chacun une direction parallèle au grand axe du guide 53. Les guides 53a et 53b sont couplés respectivement à deux réseaux 54 et 55 ayant des pas différents, P1 et P2 respectivement. Pour une même longueur d'onde $\lambda_1$ ce dispositif émet une onde lumineuse selon deux angles différents et permet donc d'établir simultanément deux interconnexions.

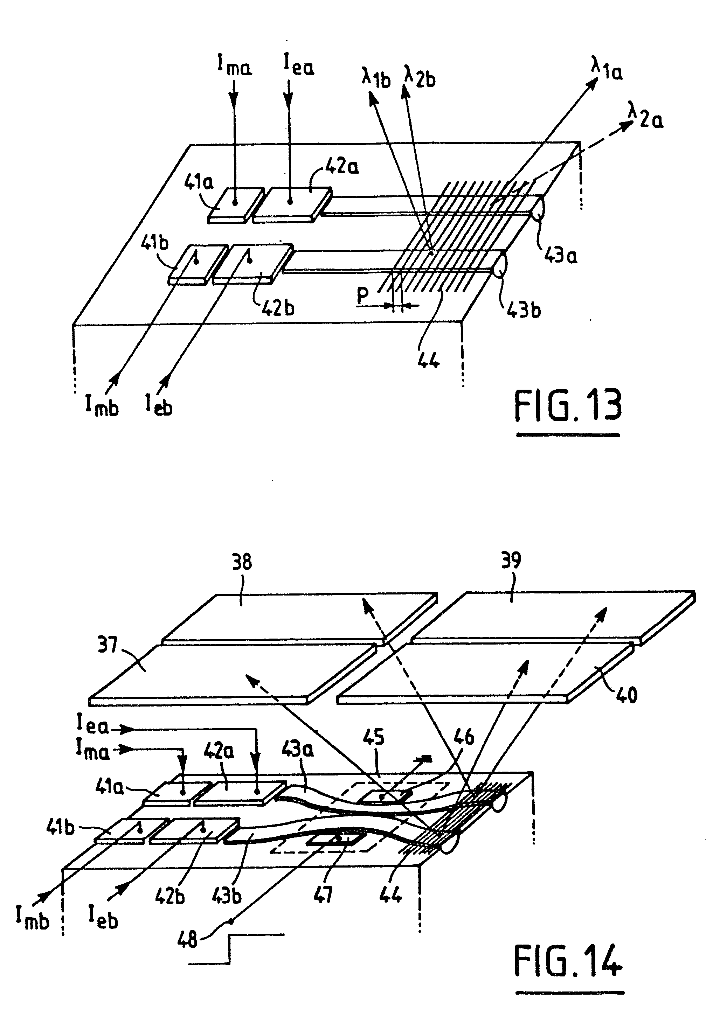

La figure 13 représente une autre variante de réalisation comportant : deux paires de diodes laser, 41a, 42a et 41b, 42b ; deux guides optiques 43a et 43b, couplés respectivement à une sortie des diodes laser 42a et 42b, et ayant leurs grands axes parallèles entre eux ; un réseau diffractant 44 est gravé à la surface des deux guides 43a et 43b perpendiculairement à leurs grands axes. Les deux couples de diodes laser sont alimentés respectivement par des courants d'intensités $I_{ma}$, $I_{ea}$ et $I_{mb}$, $I_{eb}$, indépendantes, pour transmettre deux suites de données binaires différentes.

Chaque couple de diodes laser est commandé pour émettre sur une longueur d'onde choisie entre deux valeurs : $\lambda_{1a}$ et $\lambda_{2a}$ pour les diodes laser 41a et 42a ; $\lambda_{1b}$ et $\lambda_{2b}$, pour les diodes laser 41b et 42b. Les 4 longueurs d'onde étant différentes, les quatre directions de diffraction correspondant à ces longueurs d'onde sont différentes. Le dispositif est donc équivalent à un commutateur de deux circuits à deux positions. La valeur du pas P du réseau 44 est choisie, compte tenu des valeurs de longueur d'onde, de façon à ce que les 4 directions de diffraction soient aussi différentes que possible, pour bien séparer les deux interconnexions véhiculant des données différentes.

La figure 14 représente une autre variante de réalisation permettant un plus grand nombre d'interconnexions que la variante précédente, par l'utilisation d'un coupleur directif 45 qui permet de coupler les guides 43a et 43b. Ceux-ci comportent chacun un tronçon où ils sont très proches l'un de l'autre et où leurs propriétés optiques sont commandées électriquement au moyen de deux électrodes 46 et 47. L'électrode 46 est reliée à un potentiel de référence et l'électrode 47 est reliée à une borne d'entrée 48 permettant d'appliquer un signal de commande supplémentaire qui est un signal binaire permettant de commander le transfert du signal lumineux du guide 43a vers le guide 43b, ou inversement, selon la valeur du signal binaire.

Sur cette figure 14, sont représentées les quatre photodiodes, 37 à 40, placées face au réseau diffractant 44 pour recueillir la lumière émise respectivement dans deux directions à partir du guide 43a et dans deux directeurs à partir du guide 43b. Le coupleur directif 45 permet de sélectionner, par une commande électrique, les données binaires transmises par l'onde du couple de diodes laser 41a, 42a, ou bien les données binaires transmises par l'onde du couple de diodes laser 41b, 42b. Le coupleur 45 transmet l'onde sélectionnée, soit vers l'extrémité du guide 43a, soit vers l'extrémité du guide 43b, pour être diffractée dans l'une des quatre directions correspondant aux quatre photodiodes 37 à 40.

L'invention ne se limite pas aux exemples de réalisation décrits ci-dessus. De nombreuses variantes sont à la portée de l'homme de l'art, notamment l'utilisation d'un coupleur directionnel passif à la place du coupleur actif décrit ci-dessus. Dans ce cas, le sens du couplage est déterminé par un filtrage spectral. La sélection entre deux suites de données binaires est réalisée en transmettant une onde sélectionnée selon sa longueur d'onde. La sélection est commandée en modifiant la longueur d'onde de la lumière émise par les dispositifs émetteurs 41a, 42a et 41b, 42b.

Le nombre de directions de diffraction utilisées n'est pas limité à deux, il suffit d'utiliser des courants de commande pouvant prendre un plus grand nombre de valeurs d'intensité pour obtenir une commutation selon un plus grand nombre de directions.

Le nombre de guides optiques couplés à un couple de diodes laser n'est pas limité à deux. Des coupleurs de types connus permettent de coupler un plus grand nombre de guides optiques à un même couple de diodes laser, et chaque guide optique peut être lui-même couplé à plusieurs réseaux diffractants.

Le dispositif selon l'invention pouvant être réalisé au moyen de matériaux semiconducteurs, il peut être intégré dans des puces de circuits intégrés électroniques, notamment des circuits intégrés à très grande échelle.

## Revendications

1. Dispositif d'interconnexion optique dynamique pour circuits intégrés, comportant :
- au moins un dispositif (1, 2) émetteur de lumière cohérente modulée en fréquence et en amplitude, en fonction de signaux électriques ($I_m$ et $I_d$) sélectionnant une interconnexion parmi plusieurs et représentant une suite de données ;
- au moins un guide optique (3) couplé au dispositif émetteur (1, 2) ;
- au moins un réseau diffractant (4) couplé au guide (3), pour diffracter la lumière émise par le dispositif émetteur (1, 2) dans une direction ($\theta$) fonction de la fréquence de cette lumière ;
- une pluralité de récepteurs photoélectriques (5 à 8) couplés au réseau diffractant (3) de manière à recevoir la lumière diffractée respectivement dans une pluralité de directions prédéterminées ($\theta_i$) correspondant à une pluralité d'interconnexions, chaque récepteur (5 à 8) fournissant un signal électrique fonction de l'amplitude de la lumière diffractée dans la direction ($\theta_i$) correspondante, lorsque cette interconnexion est sélectionnée ;
caractérisé en ce que chaque dispositif (1,2) émetteur de lumière, chaque guide optique (3), chaque réseau diffractant (4), sont intégrés dans un même substrat semi-conducteur de circuit intégré,

2. Dispositif selon la revendication 1, caractérisé en ce que le dispositif émetteur est constitué de deux diodes laser à semi-conducteurs (1, 2) couplées.

6

3. Dispositif selon la revendication 2, caractérisé en ce que les deux diodes laser (1, 2) sont commandées respectivement par l'intensité d'un premier courant ($I_m$) et d'un second courant ($I_e$) qui peuvent prendre une pluralité de valeurs correspondant à une pluralité d'interconnexions possibles ; l'intensité du second courant ($I_e$) étant, en outre, modulée en amplitude par les données.

4. Dispositif selon la revendication 1, caractérisé en ce que plusieurs réseaux diffractants (34, 36) sont couplés à un même guide (30) et possèdent respectivement des pas différents ($P_1$, $P_2$).

5. Dispositif selon la revendication 1, caractérisé en ce qu'il comporte plusieurs guides optiques (30, 35) couplés à un même dispositif émetteur (32, 33) ; et en ce qu'au moins un réseau diffractant est couplé à chaque guide (29, 31, 34, 36).

6. Dispositif selon la revendication 1, caractérisé en ce que plusieurs guides (43a, 43b) sont couplés respectivement à plusieurs dispositifs émetteurs (41a, 42a ; 41b, 42b), et sont couplés à un même réseau diffractant (44).

7. Dispositif selon la revendication 1, caractérisé en ce qu'il comporte une pluralité de dispositifs émetteurs (41a, 42a ; 41b, 42b) couplés respectivement à une pluralité de guides (43a, 43b) ; et en ce que les guides (43a, 43b) sont couplés entre eux par au moins un coupleur directionnel (45).

8. Dispositif selon la revendication 7, caractérisé en ce que le coupleur directionnel (45) est un coupleur dont la direction est commandée électriquement.

9. Dispositif selon la direction 7, caractérisé en ce que le coupleur directionnel (45) est un coupleur à filtrage spectral, sa direction étant commandée par un changement de la longueur d'onde de la lumière émise par les dispositifs émetteurs (41a, 42a ; 41b, 42b.)

FIG. 1

FIG. 2

FIG. 3

FIG. 4a

FIG. 4b

FIG. 5

FIG. 6

FIG. 7

FIG. 8

FIG. 9

FIG. 10

FIG. 11

FIG.12

FIG. 13

FIG. 14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | IEEE JOURNAL OF QUANTUM ELECTRONICS, vol. QE-20, no. 4, avril 1984, pages 332-334, IEEE, New York, US; N.A. OLSSON et al.: "An optical switching and routing system using frequency tunable cleaved-coupled-cavity semiconductor lasers" * En entier * --- | 1-3 | H 04 B    9/00 G 02 B    6/12 G 02 B    6/34 H 04 Q    3/52 |
| Y | ELECTRONICS LETTERS, vol. 19, no. 23, 10 novembre 1983, pages 1002-1003, Londres, GB; I. SUEMUNE et al.:"Semiconductor light sources with capabilities of electronic beam-scanning" * En entier * --- | 1-3 | |
| A | JOURNAL OF LIGHTWAVE TECHNOLOGY, vol. LT-4, no. 7, juillet 1986, pages 913-917, IEEE, New York, US; S. URA et al.: "An integrated-optic disk pickup device" * Figures 1,2 * --- | 1 | |
| A | PATENT ABSTRACTS OF JAPAN, vol. 10, no. 41 (P-429)[2098], 18 février 1986, page 146 P 429; & JP-A-60 188 911 (CANON K.K.) 26-09-1985 * En entier * --- | 4 | **DOMAINES TECHNIQUES RECHERCHES (Int. Cl.4)** G 02 F H 04 B H 01 S G 02 B H 04 Q |
| A | PATENT ABSTRACTS OF JAPAN, vol. 6, no. 41 (P-106)[919], 13 mars 1982, page 97 P 106; & JP-A-56 159 610 (TOKYO KOGYO DAIGARU) 09-12-1981 * En entier * ---                        -/- | 5-7 | |

Le présent rapport a été établi pour toutes les revendications

| Lieu de la recherche | Date d'achèvement de la recherche | Examinateur |
|---|---|---|
| LA HAYE | 09-01-1989 | LOFFREDO A. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 146 297 (ALFERNESS)<br>* Résumé; figures * | 8,9 | |
| A | PATENT ABSTRACTS OF JAPAN, vol. 9, no. 276 (P-402)[1999], 2 novembre 1985, page 114 P 402; & JP-A-60 121 404 (NIPPON DENSHIN DENWA KOSHA) 28-06-1985<br>* En entier * | 9 | |
| | | | **DOMAINES TECHNIQUES RECHERCHES (Int. Cl.4)** |

Le présent rapport a été établi pour toutes les revendications

| Lieu de la recherche | Date d'achèvement de la recherche | Examinateur |
|---|---|---|
| LA HAYE | 09-01-1989 | LOFFREDO A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)